# EUROPÄISCHE PATENTSCHRIFT

(11) **EP 2 931 495 B1**
(45) Veröffentlichungstag und Bekanntmachung des Hinweises auf die Patenterteilung: **09.01.2019**
(21) Anmeldenummer: 13796024.1
(22) Anmeldetag: 20.11.2013
(51) Int. Cl.: B29C 65/18, B29C 65/78, B65B 9/067, B65B 51/16, B65B 51/26, B65B 51/30

(54) **LÄNGSSIEGELVORRICHTUNG**
LONGITUDINAL SEALING DEVICE
DISPOSITIF DE SCELLEMENT LONGITUDINAL

(30) Priorität: 13.12.2012 DE 102012223072
(43) Veröffentlichungstag der Anmeldung: 21.10.2015
(73) Patentinhaber: Robert Bosch GmbH, 70442 Stuttgart (DE)
(72) Erfinder: ECKERT, Hubert, 79771 Klettgau 2 (DE); MAJ, Maurizio, CH-8400 Winterthur (CH)
(86) Internationale Anmeldenummer: PCT/EP2013/074236
(87) Internationale Veröffentlichungsnummer: WO 2014/090528

(56) Entgegenhaltungen:
- DE-T2- 69 402 630
- DE-T2- 69 600 796
- JP-A- 2000 109 127
- US-A- 4 807 426
- US-A1- 2005 167 056

## Beschreibung

### TECHNISCHES GEBIET

Die vorliegende Erfindung betrifft eine Längssiegelvorrichtung zur Herstellung einer Siegelnaht nach dem Oberbegriff von Anspruch 1.

### STAND DER TECHNIK

Bei horizontalen Schlauchbeutelmaschinen wird um die zu verpackenden Produkte/Produktegruppen eine endlose Folie mittels einer sogenannten Formschulter zu einem Schlauch geformt, wobei die seitlichen Folienränder zu einer Flossennaht übereinandergelegt und versiegelt werden. Zum Transport des Schlauches mit den darinliegenden Produkten und damit auch das Abrollen der Folien von der Folienrolle wird in der Regel mit gegenläufig drehenden Rollenpaaren durchgeführt, welche die Flossennaht transportieren. Mindestens eines der Rollenpaare ist beheizt, wodurch die beiden übereinanderliegenden Folienbereiche durch die Flossennaht verschweisst werden.

Anschliessend wird mit einer Quersiegelstation quer zur Laufrichtung des Schlauches zwischen zwei Produkten / Produktegruppen eine Quernaht geschweisst und diese mit einem Messer getrennt. Dadurch werden einzelne sogenannte Schlauchbeutel erzeugt. Mit diesen Schlauchbeuteln wird einerseits das Produkt gegen mechanische Einflüsse geschützt, ebenfalls kann auch ein Schutz gegen Eintritt von Feuchtigkeit und/oder Gase/Sauerstoff erreicht werden.

Aus dem Stand der Technik sind Lösungen bekannt, welche die Längssiegelnaht durch drei in Förderrichtung des Schlauches hintereinander liegende Rollenpaare transportieren und siegeln. Dabei ist in der Regel das erste Rollenpaar kalt und ausschliesslich zum Zusammenfügen der zu verschweissenden Folienteile und zum Transport des Schlauches vorgesehen. Die zu verschweissenden Folienteile werden auch als Fins oder Flosse bezeichnet. Unter einem Fin/einer Flosse werden Folienrandbereiche verstanden, welche mit ihrer Innenseite übereinander gelegt werden. Dies wird in der Fachsprache als Flossennaht bezeichnet. Das zweite Rollenpaar ist beheizt und das dritte Rollenpaar kann ebenfalls beheizt, aber auch kalt, sein. Dabei hat das dritte Rollenpaar die Aufgabe den durch das zweite Rollenpaar aufgeschmolzene Folienbereich mittels Druck und zusätzlich optional Wärme zu versiegeln. Es muss deshalb auf derselben Ebene bzw. Höhe wie das zweite Rollenpaar angeordnet sein. Gleichzeitig wird der Schlauch mit diesem Rollenpaar transportiert.

Bei Verwendung von sogenannten Mehrschicht- oder Multilayerfolien erreicht man mit den drei hintereinander angeordneten Rollen gute Resultate. Diese Folien weisen typischerweise eine mechanische stabile sowie wärmeunempfindliche Trägerschicht und mindestens eine oder mehrere Siegelschichten auf. Die Siegelschichten schmelzen bei Wärmeeinwirkung. Aufgrund der Trägerschicht sind diese Folien gegen Zugkräfte durch deren Schichtaufbau stabil. Ein Transport des Schlauches an diesen aufgeschmolzenen Bereichen funktioniert gut, da die Trägerschicht die notwendige Stabilität gibt.

Es gibt aber Anwendungen, bei welchen Monofolien eingesetzt werden. Bei solchen Monofolien fehlt diese mechanisch stabile Trägerschicht. Ebenfalls sind immer häufiger günstige und dünnere Heisssiegelfolien im Einsatz, welche sehr schnell durch das Aufwärmen an Stabilität verlieren. Werden nun diese Monofolien mit den oben genannten Vorrichtungen mit den drei Rollenpaaren transportiert, wurde festgestellt, dass über die Rolle, welche nach der beheizten Rolle folgt, die geschweisste Stelle negativ beeinflusst wird. Es treten Zugkräfte im Material auf, welche die Schweissstelle schwächen. Zudem konnte ein Verziehen der Folie festgestellt werden, was ebenfalls sehr nachteilig ist, weil dann die Dichtigkeit der Schweissstelle negativ beeinträchtigt wird.

Insbesondere bei höheren Foliengeschwindigkeiten sind diese negativen Faktoren vermehrt aufgetreten. Aus der US 2005/167056 A1, US 4 807 426 A, DE 696 00 796 T2 und DE 694 02 630 T2 sind Siegelvorrichtungen bekannt geworden.

### DARSTELLUNG DER ERFINDUNG

Ausgehend von diesem Stand der Technik liegt der Erfindung die Aufgabe zugrunde, eine Vorrichtung anzugeben, welche die Nachteile des Standes der Technik überwindet. Insbesondere ist es eine Aufgabe der Erfindung, dass die Qualität der Längssiegelnacht verbessert wird. Eine weitere Aufgabe der Erfindung ist die Qualitätsverbesserung der Längssiegelnaht von temperatursensiblen Folien, wie Monofolien oder preiswerte, dünne Heisssiegelfolien. Insbesondere soll die Längsnaht an der herzustellenden Verpackung verbleiben und die Folie soll auch bei höheren Foliengeschwindigkeiten verarbeitbar sein.

Eine solche Aufgabe löst der Gegenstand nach Anspruch 1. Demgemäss dient eine Längssiegelvorrichtung zur Herstellung einer Längssiegelnaht an einem Packstoff, welcher einen Schlauchabschnitt sowie einen sich dem Schlauchabschnitt anschliessenden Nahtabschnitt mit der Längssiegelnaht aufweist, in welchem Nahtabschnitt eine erste Lage des Packstoffes und eine zweite Lage des Packstoffes aufeinander liegen. Der Schlauchabschnitt wird auf einer ersten Seite, vorzugsweise oberhalb, und der Nahtabschnitt auf einer zweiten Seite, vorzugsweise unterhalb, einer Transportebene der Längssiegelvorrichtung entlang einer parallel zu dieser Transportebene verlaufender Laufrichtung bewegt. Die Längssiegelvorrichtung umfasst eine Positioniereinrichtung zur Positionierung der beiden Lagen zueinander, ein beheiztes Siegelrollenpaar zur Bereitstellung der Längssiegelnaht zwischen den beiden Lagen und ein in Laufrichtung gesehen nach dem Siegelrollenpaar angeordnetes unbeheiztes Transportrollenpaar. Das Siegelrollenpaar umfasst zwei Siegelrollen, welche mit einer Siegelmantelfläche mit dem Packstoff in Kontakt sind. Das Transportrollenpaar umfasst zwei Transportrollen, welche mit einer Transportmantelfläche mit dem Packstoff in Kontakt sind. Die Siegelmantelfläche des Siegelrollenpaars ist in einer Richtung senkrecht zur Transportebene versetzt zur Transportmantelfläche angeordnet.

Folglich greift das Transportrollenpaar mit der Transportmantelfläche mit einem Versatz zur Siegelmantelfläche am Packstoff an, wodurch sichergestellt wird, dass das Transportrollenpaar mit der Transportmantelfläche an einem Packstoffbereich angreift, welcher nicht durch die Siegelmantelflächen erwärmt wurden. Diese nicht-erwärmten Bereiche weisen dabei gegenüber den erwärmten Bereichen eine grössere Stabilität auf, wodurch der Vortrieb verbessert wird. Zudem wird auch die Siegelnaht nicht negativ durch die Transportrollen beeinflusst. Es kommt zu keiner ausschliesslichen Krafteinwirkung auf die Siegelnaht.

Sofern die Siegelmantelfläche und die Transportmantelfläche in der Laufrichtung gesehen überlappend sind, was optional ist, so weist diese Konfiguration den Vorteil auf, dass einerseits durch die Transportrollen am nicht-erwärmten Bereich angegriffen wird und dass andererseits im erwärmten Bereich die Transportrollen den erwärmten Bereich zusammenpressen, was sich positiv auf die Siegelung auswirkt.

Zusammenfassend kann gesagt werden, dass die Siegelnaht nach Erstellung durch die Siegelrollen nicht durch die Transportrollen nachteilig beeinflusst wird. Insofern kann mit der Längssiegelvorrichtung eine qualitativ hochstehende Siegelnaht bereitgestellt werden.

Der Nahtabschnitt ist besonders bevorzugt ein Flossennahtabschnitt, wobei eine Flossennaht geschaffen wird.

Die Siegelmantelfläche des Siegelrollenpaars ist in der Richtung senkrecht zur Transportebene beabstandet zur Transportebene angeordnet und die Transportmantelfläche des Transportrollenpaars ist in der besagten Richtung zum Siegelrollenpaar versetzt. Die Transportmantelfläche ist zur Transportebene hin zur Siegelmantelfläche versetzt.

Die Siegelmantelfläche ist mit einer Oberkante und einer Unterkante begrenzt und die Transportmantelfläche ist mit einer Oberkante und einer Unterkante begrenzt. Die beiden Oberkanten sind bezüglich der besagten Richtung mit einem Abstand versetzt bzw. beabstandet zueinander angeordnet. Die Oberkante der Transportmantelfläche liegt näher an der Transportebene als die Oberkante der Siegelmantelfläche, wodurch sichergestellt wird, dass die Transportmantelfläche immer am kalten Bereich der Siegelnaht angreift.

Erfindungsgemäß liegt die Unterkante der Transportmantelfläche oberhalb der Oberkante der Siegelmantelfläche, so dass das Transportrollenpaar mit der Transportmantelfläche ausserhalb des Wirkbereichs der Siegelmantelfläche des Siegelrollenpaars angreift. Mit anderen Worten kann auch gesagt werden, dass das Transportrollenpaar mit der Transportmantelfläche ausschliesslich im Bereich zwischen der Oberkante der Siegelmantelfläche und der Transportebene angreift. Hierdurch kann sichergestellt werden, dass das Transportrollenpaar überhaupt keinen Einfluss auf die Siegelstelle nimmt. Insofern eignet sich diese Ausführungsform im Wesentlichen für empfindliche Folien.

Vorzugsweise weist die Transportmantelfläche des Transportrollenpaars rechtwinklig zur Transportebene gesehen eine Höhe auf, welche kleiner als der Abstand zwischen der Transportebene und der Oberkante der Siegelmantelfläche ist, wobei die Transportmantelfläche bezüglich der Transportebene gesehen, ausschliesslich innerhalb des besagten Abstandes liegt.

Vorzugsweise ist der Abstand zwischen der Oberkante der Siegelmantelfläche und der Oberkante der Transportmantelfläche mindestens 2 mm, besonders bevorzugt mindestens 4 mm ist. Alternativ ist der Abstand zwischen der Oberkante der Siegelmantelfläche und der Oberkante der Transportmantelfläche. zwischen 2 mm und 25 mm, insbesondere zwischen 2 mm und 15 mm, besonders bevorzugt zwischen 2 mm und 8 mm.

Vorzugsweise weisen die Siegelmantelflächen des Siegelrollenpaars eine Höhe von mindestens 1 mm, und maximal von 15 mm, insbesondere von maximal 10 mm, besonders bevorzugt von maximal 5 mm auf.

Vorzugsweise umfasst die Positioniereinrichtung ein unbeheiztes Positionierrollenpaar mit zwei Positionierrollen, die Positioniermantelflächen aufweisen. Mit der Positioniereinrichtung sind die beiden Lagen des Packstoffes zueinander positionierbar und der Packstoff ist entlang der Laufrichtung bewegbar, wobei das Positionierrollenpaar vorzugsweise mit der zur Transportebene zugewandten Stirnfläche bzw. den Positioniermantelflächen im Wesentlichen direkt an die Transportebene anschliesst.

Vorzugsweise ist das Positionierrollenpaar in Laufrichtung gesehen vor dem Siegelrollenpaar angeordnet ist. Das heisst für die relative Anordnung zwischen den Rollenpaaren, dass in Laufrichtung gesehen, das erste Rollenpaar das Positionierrollenpaar ist. In Laufrichtung gesehen nach dem Positionierrollenpaar folgt dann das Siegelrollenpaar, welches wiederum vom Transportrollenpaar gefolgt wird.

Vorzugsweise entspricht die Höhe der Positioniermantelflächen rechtwinklig zur Transportebene gesehen im Wesentlichen der Länge des Nahtabschnittes rechtwinklig zur Transportebene gesehen oder ist grösser als die besagte Länge. Somit können keine Querkräfte auf den Schlaubeutel wirken.

Besonders bevorzugt liegt das Positionierrollenpaar mit den der Transportebene zugewandten Stirnflächen der Positionierrollen auf der gleichen Höhe wie das Transportrollenpaar mit den der Transportebene zugewandten Stirnfläche der Transportrollen. Somit liegen die Rollenpaare auf gleicher Höhe, was ebenfalls das Entstehen von Querkräften verhindert. Zusätzlich können die Höhen der Positioniermantelflächen und der Transportmantelflächen ebenfalls gleich hoch ausgebildet sein.

Vorzugsweise schliesst sich das Transportrollenpaar mit den zur Transportebene zugewandten Stirnflächen bzw. den Transportmantelflächen im Wesentlichen direkt an die Transportebene an. In einer besonders bevorzugten Ausführungsform liegen das Transportrollenpaar und das Positionierrollenpaar mit den zur Transportebene zugewandten Strinflächen beide im Wesentlichen direkt an der Transportebene.

In einer Weiterbildung der vorliegenden Erfindung ist im Bereich des Siegelrollenpaars ein Kühlelement angeordnet, welches sich von der Transportebene in Richtung des Siegelrollenpaars erstreckt, wobei die Höhe des Kühlelementes von der Transportebene gesehen kleiner ist als der Abstand zwischen den der Transportebene zugewandten Stirnflächen der Siegelrollen und der Transportebene oder zwischen der Oberkante der Siegelmantelfläche der Siegelrollen und der Transportebene.

Vorzugsweise weist das Kühlelement die Gestalt eines Bleches auf.

Besonders bevorzugt weist jedes der Rollenpaare zwei beabstandet zueinander angeordnete Rollen auf, welche sich um parallel zueinander verlaufende Mittelachsen drehen, wobei der Packstoff mit dem Nahtabschnitt durch diese Rollen läuft.

Eine Horizontalschlauchbeutelmaschine zur Herstellung eines Schlauchbeutels umfasst eine Längssiegelvorrichtung nach einem der vorhergehenden Ansprüche, wobei die Transportebene im Wesentlichen in der Horizontalen liegt.

Weitere Ausführungsformen sind in den abhängigen Ansprüchen angegeben.

### KURZE BESCHREIBUNG DER ZEICHNUNGEN

Eine bevorzugte Ausführungsform der Erfindung wird im Folgenden anhand der Zeichnungen beschrieben, die lediglich zur Erläuterung dienen und nicht einschränkend auszulegen sind. In den Zeichnungen zeigen:
- Fig. 1: eine Ansicht einer Vorrichtung mit einer Längssiegelvorrichtung zur Siegelung eines Packstoffes;
- Fig. 2a: eine schematische Seitenansicht einer Längssiegelvorrichtung;

- Fig. 2b: eine Detailansicht von Fig. 2a;
- Fig. 3: eine schematische Draufsicht der Längssiegelvorrichtung nach Fig. 2;
- Fig. 4a: eine schematische Seitenansicht einer Längssiegelvorrichtung nach einer ersten Konfiguration;
- Fig. 4b: eine schematische Ansicht der Längssiegelvorrichtung nach Fig. 4a entlang der Laufrichtung des Packstoffes;
- Fig. 5a: eine schematische Seitenansicht einer Längssiegelvorrichtung nach einer zweiten Konfiguration;
- Fig. 5b: eine schematische Ansicht der Längssiegelvorrichtung nach Fig. 5a entlang der Laufrichtung des Packstoffes
- Fig. 6a: eine schematische Seitenansicht einer Längssiegelvorrichtung nach einer Ausführungsform der vorliegenden Erfindung; und
- Fig. 6b: eine schematische Ansicht der Längssiegelvorrichtung nach Fig. 6a entlang der Laufrichtung des Packstoffes.

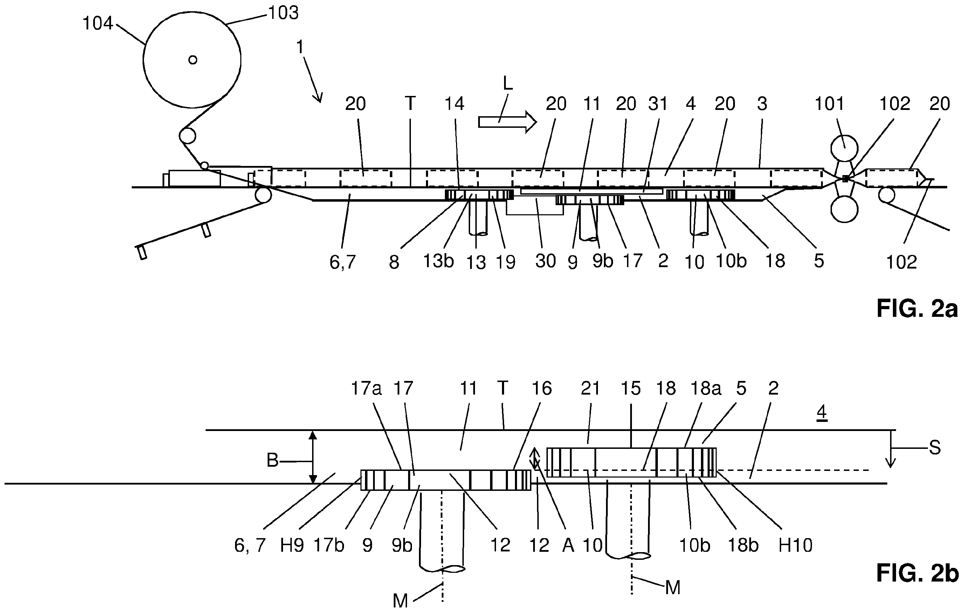

Bei den Konfigurationen gemäß der Figuren 2a, 2b, 4a, 4b, 5a und 5b handelt es sich nicht um einen Teil der Erfindung sondern um einen Stand der Technik, der das Verständnis der Erfindung erleichtert.

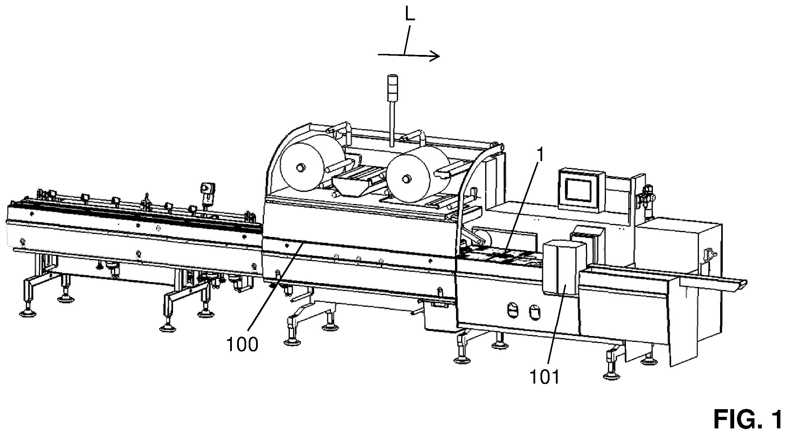

In der Figur 1 wird eine perspektivische Ansicht einer Schlauchbeutelmaschine gezeigt. Prinzipiell sind solche Maschinen aus dem Stand der Technik bekannt. Die hier gezeigte Schlauchbeutelmaschine umfasst eine erfindungsgemässe Längssiegelvorrichtung 1 zur Herstellung einer Siegelnaht. Weiter umfasst die Schlauchbeutelmaschine eine Zuführstrecke 100, über welche die zu verpackenden Produkte zugeführt werden und eine endlose Folie um die Produkte zu einem Schlauch umschliessen. Der Schlauch mit den darinliegenden Produkten wird der Längssiegelvorrichtung 1 zugeführt. In Laufrichtung L gesehen nach der Längssiegelvorrichtung 1 umfasst die Schlauchbeutelmaschine zudem eine Quersiegeleinrichtung 101, welche am Schlaubeutel eine Quersiegelnaht quer zur Laufrichtung L erstellt. Somit lässt sich ein Produkt in einem Schlauchbeutel mit der Längssiegelvorrichtung 1 und der Quersiegelvorrichtung 101 verpacken.

In der Figur 2a wird eine schematische Ansicht der Längssiegelvorrichtung 1 gezeigt. Die Längssiegelvorrichtung 1 dient zur Herstellung einer Längssiegelnaht 2 an einem Packstoff 3. Der Packstoff 3 weist dabei im Bereich der Längssiegelvorrichtung 1 einen Schlauchabschnitt 4 sowie einen sich dem Schlauchabschnitt 4 anschliessenden Nahtabschnitt 5 auf. Im Schlauchabschnitt 4 liegen die zu verpackenden Produkte 20 und im Nahtabschnitt 5 wird die Längssiegelnaht 2 mit der Längssiegelvorrichtung 1 hergestellt. Im Nahtabschnitt 5 liegt eine erste Lage 6 des Packstoffes 3 und eine zweite Lage 7 des Packstoffes 3 aufeinander. Die Lagen sind dabei vorzugsweise deckungsgleich. Der Schlauchabschnitt 4 liegt hier oberhalb einer Transportebene T der Längssiegelvorrichtung 1. Der Nahtabschnitt 5 liegt hier unterhalb der Transportebene T der Längssiegelvorrichtung 1. Sowohl Schlauchabschnitt 4 als auch Nahtabschnitt 5 werden entlang einer parallel zu dieser Transportebene verlaufenden Laufrichtung L bewegt. Dies ist durch den Pfeil L in der Figur 2a illustriert. Vorzugsweise verläuft die Transportebene T horizontal. Es kann aber in anderen Anwendungen auch vorgesehen sein, dass die Transportebene T winklig zur Horizontalen steht.

Die Längssiegelvorrichtung 1 umfasst im Wesentlichen eine Positioniereinrichtung 8 zur Positionierung der beiden Lagen 6, 7 zueinander, ein beheiztes Siegelrollenpaar 9 zur Bereitstellung der Längssiegelnaht 2 zwischen den beiden Lagen 6, 7 und einen in Laufrichtung L gesehen nach dem Siegelrollenpaar 9 angeordnetes unbeheiztes Transportrollenpaar 10. In Laufrichtung L gesehen folgt also nach der Positioniereinrichtung 8 das Siegelrollenpaar 9 und dann das Transportrollenpaar 10. In anderen Ausführungsformen ist auch die Anordnung von weiteren Rollenpaaren mit gleicher oder anderer Funktion denkbar. Ebenfalls kann zur besseren Erwärmung der Folienrandbereiche 6,7 eine Vorheizung 30 angeordnet sein.

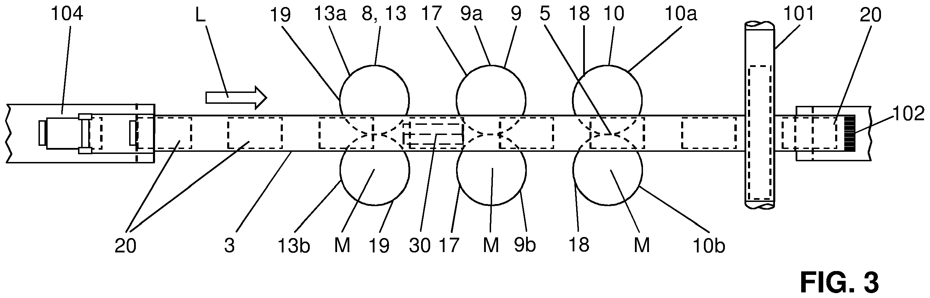

Von der Figur 3 kann erkannt werden, dass das Siegelrollenpaar 9 zwei Siegelrollen 9a, 9b umfasst. Die Siegelrollen 9a, 9b stehen jeweils mit einer Siegelmantelfläche 17 mit dem Packstoff 3 bzw. mit der ersten Lage 6 und der zweiten Lage 7 in Kontakt. Über die Siegelmantelfläche 17, welche auch in der Figur 2b gut erkannt werden kann, wird die eigentliche Längssiegelnaht 2 bereitgestellt. Die Siegelmantelfläche 17 kann sich über die ganze Höhe der Siegelrollen 9a, 9b oder nur einen Teil davon erstrecken. Die Höhe der Siegelmantelfläche 17 wird mit H9 angegeben. Die Siegelmantelfläche 17 wird durch eine Oberkante 17a und eine Unterkante 17b begrenzt. Die Oberkante 17a liegt dabei näher an der Transportebene T als die Unterkante 17b. Die Oberkante 17a und die Unterkante 17b sind umlaufende Kanten, welche sich um die Mittelachse M herum erstrecken.

Auch von der Figur 3 kann erkannt werden, dass das Transportrollenpaar 10 zwei Transportrollen 10a, 10b umfasst. Die Transportrollen 10a, 10b umfassen jeweils eine Transportmantelfläche 18, welche mit dem Packstoff 3 bzw. mit der ersten Lage 6 und der zweiten Lage 7 des Packstoffes 3 in Kontakt sind. Über die Transportmantelfläche 18 wird der Packstoff 3 entlang der Laufrichtung L bewegt. In der Figur 2b kann die Transportmantelfläche 18 der Transportrolle 10b gut erkannt werden. Hier erstreckt sich die Transportmantelfläche 18 über die gesamte Höhe der Transportrolle 10b. Es ist auch denkbar, dass sich die Transportmantelfläche 18 nicht über die ganze Höhe der Transportrolle 10b erstreckt. Die Höhe der Transportmantelfläche 18 wird mit H10 angegeben. Die Transportmantelfläche 18 wird durch eine Oberkante 18a und eine Unterkante 18b begrenzt. Die Oberkante 18a liegt dabei näher an der Transportebene T als die Unterkante 18b. Die Oberkante 18a und die Unterkante 18b sind umlaufende Kanten, welche sich um die Mittelachse M herum erstrecken.

Die Figur 2a und insbesondere die vergrösserte Darstellung in der Figur 2b zeigen, dass die Siegelmantelfläche 17 des Siegelrollenpaars 9 in einer Richtung S senkrecht zur Transportebene versetzt zur Transportmantelfläche 18 angeordnet ist. Mit anderen Worten gesagt: Die Siegelmantelfläche 17 des Siegelrollenpaars 9 ist in einer Richtung senkrecht zur Transportebene T beabstandet zur Transportebene T angeordnet und die Transportmantelfläche 18 des Transportrollenpaars 10 ist in der besagten Richtung zum Siegelrollenpaar 9 versetzt. Folglich liegen also die Siegelmantelfläche 17 und die Transportmantelfläche 18 bezüglich der Transportebene T nicht auf der gleichen Höhe. Die Oberkante 17a der Siegelmantelfläche 17 und die Oberkante 18a der Transportmantelfläche 18 sind in der besagten Richtung S beabstandet zueinander angeordnet. Der Abstand zwischen den beiden Oberkanten 17a und 18a wird in den Figuren mit dem Bezugszeichen A angegeben. Dabei ist die Oberkante 18a der Transportmantelfläche 18 näher an der Transportebene T, als die Oberkante 17a der Siegelmantelfläche 17. Dieser Versatz oder Abstand hat den Vorteil, dass die Transportmantelfläche 18 des Transportrollenpaars 10 immer in einem Bereich am Packstoff 3 angreift, welcher nicht durch das Siegelrollenpaar 9 erwärmt wurde. Hierdurch greift das Transportrollenpaar 10 immer an einem mechanisch stabilen Bereich des Packstoffes 3 an und es kommt zu keinem Verzug im Packstoff 3, wodurch eben der Packstoff 3 im Bereich der Längssiegelnaht 2 nicht negativ beeinflusst wird. Die besagte Richtung senkrecht zur Transportebene T wird in der Figur 2b mit dem Pfeil S gezeigt.

Die Siegelmantelfläche 17 steht mit einem Abstand beabstandet zur Transportebene T, wobei ein Abstandsbereich 11 zwischen der Transportebene T und der Oberkante 17a der Siegelmantelfläche 17 geschaffen wird. Die Transportmantelfläche 18 liegt dabei mindestens teilweise im Abstandsbereich 11. Folglich greift die Transportmantelfläche 18 mindestens teilweise im Abstandsbereich 11 am Nahtabschnitt 5 an. Der Bereich des Nahtabschnittes 5, welcher im Abstandsbereich 11 liegt, kann auch als nicht-erwärmter Bereich 21 bezeichnet werden.

In der Figur 2b liegt die Transportmantelfläche 18 sowohl im Abstandsbereich 11 als auch im Bereich, wo durch die Siegelmantelfläche 17 die Siegelnaht 2 hergestellt wurde. In der Konfiguration nach der Figur 2b liegt die Unterkante 18b der Transportmantelfläche 18 unterhalb der Oberkante 17a der Siegelmantelfläche 17, so dass das Transportrollenpaar 10 mit der Transportmantelfläche 18 im Bereich des besagten Abstandes A und im Wirkbereich 12 der Siegelmantelfläche 17 des Siegelrollenpaars 9 angreift. Mit anderen Worten kann gesagt werden, dass die Transportmantelfläche 18 auch im Wirkbereich 12 der Siegelmantelfläche 17 angreift. Diese Konfiguration hat den Vorteil, dass einerseits am festen Bereich des Packstoffs 3, welcher nicht durch das Siegelrollenpaar 9 erwärmt wurde, und andererseits am durch das Siegelrollenpaar 9 erwärmten Bereich angegriffen wird. Folglich hat hier das Transportrollenpaar 10 die Funktion, dass einerseits der Vortrieb des Packstoffes 3 gewährleistet wird und andererseits gleichzeitig eine Kraft auf die Längssiegelnaht 2 ausgeübt wird, welche diese entsprechend verfestigt.

In den Figuren 2a und 3 wird zudem stromabwärts in Laufrichtung L gesehen noch die Quersiegelstation 101 schematisch gezeigt. Die Quersiegelstation 101 stellt eine Quersiegelnaht 102 bereit. Somit wird mit der Quersiegelvorrichtung 101 das Produkt 20 vollständig im Schlauchbeutel verpackt, so wie dies in der Figur 2a gezeigt wird. In der Figur 3 wird zudem noch die Quersiegelnaht 102 entsprechend dargestellt. Auch in den Figuren 2a und 3 kann die Zuführrolle 103 einer Zuführeinrichtung 104 erkannt werden. Über diese Zuführrolle 103 wird der Packstoff abgewickelt und der Längssiegelvorrichtung 1 zugeführt. Die Zuführeinrichtung 104 und die Quersiegelvorrichtung 101 sind im Wesentlichen aus dem Stand der Technik bekannt.

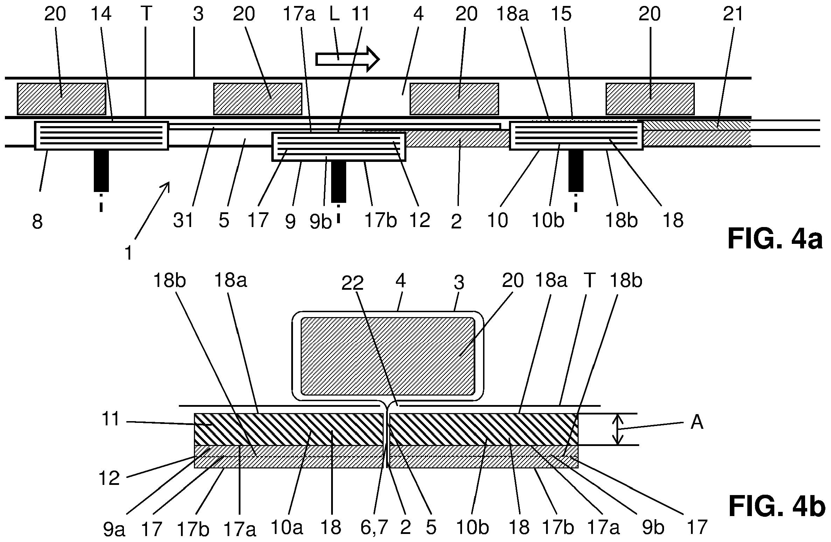

Die Figuren 4a und 4b zeigen eine erste Konfiguration der Anordnung der Siegelmantelfläche 17 relativ zur Transportmantelfläche 18. Gleiche Teile sind dabei mit gleichen Bezugszeichen wie in den vorhergehenden Figuren bezeichnet. Mit dem Siegelrollenpaar 9 bzw. mit der Siegelmantelfläche 17 wird die Längssiegelnaht 2 bereitgestellt. Die Längssiegelnaht 2 liegt dabei im Wesentlichen im Wirkbereich 12 des Siegelrollenpaars 9. Weiter greift hier das Transportrollenpaar 10 mit den Transportmantelflächen 18 im Bereich der Längssiegelnaht 2 und im nicht erwärmten Bereich 21 des Nahtabschnittes 5 an. Es handelt sich im Wesentlichen um eine ähnliche Konfiguration, wie diese bereits mit der Figur 2b erläutert wurde.

In der Figur 4b wird eine schematische Darstellung in Richtung der Laufrichtung L gezeigt. Oberhalb der Transportebene T kann gut erkannt werden, dass das zu verpackende Produkt 20 durch den Packstoff 3, hier durch den Schlauchabschnitt 4 umgeben wird. Weiter kann gut erkannt werden, dass der Nahtabschnitt 5 durch einen Schlitz 22 in der Transportebene T nach unten zu den Siegelrollenpaar 9 und dem Transportrollenpaar 10 ragt. Das Produkt 20 wird somit vollständig durch den Schlauchbeutel 4 umgeben und im Bereich des Nahtabschnittes wird der Schlauchbeutel 4 durch die Längssiegelnaht 2 verschlossen, so dass das Produkt 20 vollständig durch den Packstoff 3 umgeben ist.

In der Abbildung 4b kann auch der Abstand A und der Abstandsbereich 11 gut erkannt werden. Die Siegelmantelflächen 17 der Siegelrollen 9a, 9b liegen beabstandet zur Transportebene T. Die Transportrollen 10a, 10b sind hier so angeordnet, dass sich diese mit der Transportmantelfläche 18 sowohl im Abstandsbereich 11 als auch im Wirkbereich 12 der Siegelmantelfläche 17 erstrecken. Wie dies in der Figur 4b dargestellt ist, erstreckt sich die Transportmantelfläche 18 auch über den Wirkbereich 12. Die Transportrollen 10a, 10b greifen also mit der Transportmantelfläche 18 immer auch an einem kalten, nicht durch die Siegelrollen 9a, 9b erwärmten Abschnitt, an. Hierdurch wird verhindert, dass die Siegelnaht 2 einer Belastung durch die Transportrollen ausgesetzt wird.

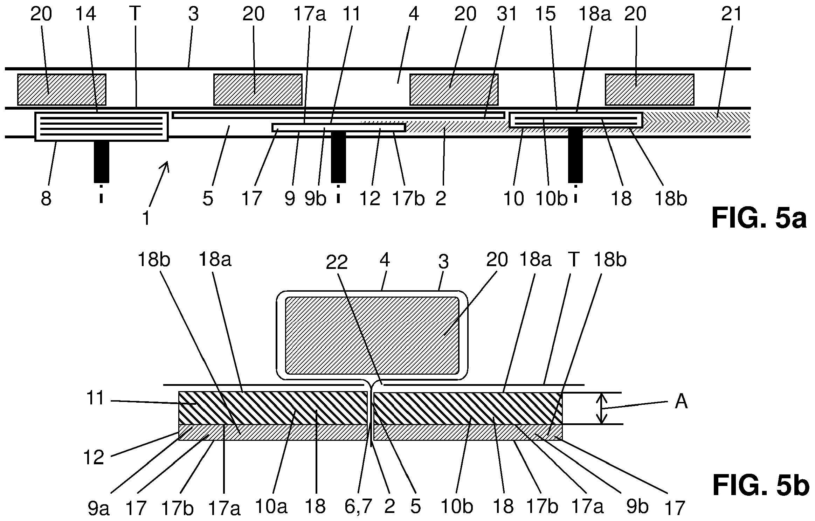

In den Figuren 5a und 5b wird eine zweite Konfiguration der relativen Anordnung der Siegelmantelflächen 17 der Siegelrollen 9a, 9b zu den Transportmantelflächen 18 der Transportrollen 10a, 10b gezeigt. Gleiche Teile sind wiederum mit gleichen Bezugszeichen versehen. Hier liegt die Unterkante 18b der Transportmantelfläche 18 auf im Wesentlicher gleicher Höhe oder leicht unterhalb der Oberkante 17a der Siegelmantelfläche, so dass das Transportrollenpaar 10 mit der Transportmantelfläche 18 im Wesentlichen angrenzend zum Wirkbereichs 12 der Siegelmantelfläche 17 des Siegelrollenpaars 9 angreift. Mit anderen Worten kann gesagt werden, dass hier die Transportmantelflächen 18 zu den Siegelmantelflächen 17 derart liegen, dass die Transportmantelfläche 18 nur teilweise in den Wirkbereich 12 der Siegelmantelflächen 17 eingreifen. Folglich erstreckt sich die Transportmantelfläche 18 nicht vollständig über die Siegelnaht 2. Dies hat den Vorteil, dass der Einfluss auf die Siegelnaht weiter minimiert werden kann.

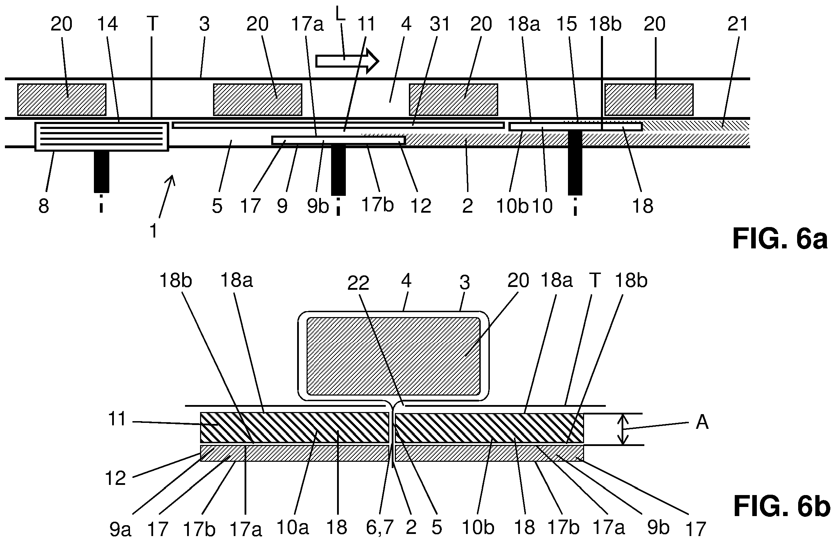

Die Figuren 6a und 6b zeigen eine erfindungsgemäße Konfiguration der relativen Anordnung der Siegelmantelflächen 17 der Siegelrollen 9a, 9b zur Transportmantelfläche 18 der Transportrollen 10a, 10b. In Laufrichtung L gesehen liegen hier die Siegelmantelfläche 17 und die Transportmantelfläche 18 beabstandet zueinander. Es findet kein Übergreifen statt. Die Unterkante 18b der Transportmantelfläche 18 liegt oberhalb der Oberkante 17a der Siegelmantelfläche, so dass das Transportrollenpaar 10 mit der Transportmantelfläche 18 ausserhalb des Wirkbereichs 12 der Siegelmantelfläche 17 des Siegelrollenpaars 9 angreift. Folglich greift hier die Transportmantelfläche 18 ausschliesslich am nicht erwärmten Bereich 21 des Nahtabschnittes 5 an. Die Siegelnaht 2 kommt hier nicht in Kontakt mit der Transportmantelfläche 18. Diese Konfiguration hat sich bei besonders dünnen Folien als vorteilhaft erwiesen.

In der Folge werden mit Bezug zur vergrösserten Darstellung der Figur 2b weitere Merkmale der Längssiegelvorrichtung 1 erläutert. Diese Merkmale können auf alle hierin genannten Ausführungsbeispiele angewandt werden.

Die Transportmantelfläche 18 des Transportrollenpaars 10 weist rechtwinklig zur Transportebene T gesehen eine Höhe H10 auf. Je nach Konfiguration kann diese Höhe H10 kleiner als der Abstand zwischen Transportebene T und der Oberkante 17a der Siegelmantelfläche 17 sein, wobei die Transportmantelfläche 18 bezüglich der Transportebene T gesehen ausschliesslich innerhalb des Abstandsbereich 11 liegt. Dies wird beispielswiese in der Konfiguration gemäss der Figur 6a/6b gezeigt. In anderen Ausführungsformen kann die Höhe H10 grösser als der Abstand zwischen Transportebene T und der Oberkante 17a der Siegelmantelfläche 17 sein, wobei die Transportmantelfläche 10 bezüglich der Transportebene T gesehen innerhalb des Abstandsbereichs 11 und in Richtung der Laufrichtung L gesehen den Wirkbereich 12 der Siegelmantelflächen 17 liegt. Dies wird beispielsweise in der Figur 4a, 4b, 5a und 5b dargestellt.

Vorzugsweise ist der Abstand A zwischen der Oberkante 17a der Siegelmantelfläche 17 und der Oberkante 18a der Transportmantelfläche 18 mindestens 3 mm, besonders bevorzugt mindestens 2 mm ist. Besonders bevorzugt ist der Abstand A zwischen der Oberkante 17a der Siegelmantelfläche 17 und der Oberkante 18a der Transportmantelfläche zwischen 2 mm und 25 mm, insbesondere zwischen 2 mm und 15 mm, besonders bevorzugt zwischen 2 mm und 8 mm.

Die Siegelmantelflächen 17 des Siegelrollenpaars 9 weisen eine Höhe H9 auf, so wie dies in der Figur 2b dargestellt ist. Unter der Höhe H9 wird vorzugsweise die Höhe der sich mit dem Packstoff 3 in Verbindung stehenden Siegelmantelfläche 17 verstanden. Besonders bevorzugt ist die eine Höhe H9 mindestens 1 mm, und maximal von 15 mm, insbesondere von maximal 10 mm, besonders bevorzugt von maximal 5 mm.

Vorzugsweise weist die Längssiegelvorrichtung 1 eine Positioniereinrichtung 8 auf. Die Positioniereinrichtung 8 umfasst hier ein unbeheiztes Positionierrollenpaar 13 mit zwei Positionierrollen 13a, 13b. Die Positionierrollen 13a, 13b weisen je eine Positioniermantelfläche 19 auf. Mit den Positionierrollen 13a, 13b lassen sich die beiden Lagen 6, 7 des Packstoffes 3 zueinander positionieren. Weiter ist der Packstoff 3 entlang der Laufrichtung L mit den Positionierrollen 13a, 13b bewegbar. Besonders bevorzugt schliesst das Positionierrollenpaar 13 mit der zur Transportebene T zugewandten Stirnfläche 14 bzw. den Positioniermantelflächen 19 im Wesentlichen direkt an die Transportebene T an. Somit greift also die Positioniermantelfläche 19 vorzugsweise am gesamten Nahtabschnitt 5 an.

Von der Figur 2a kann gut erkannt werden, dass in einer bevorzugten Ausführungsform die Positioniermantelflächen 19 rechtwinklig zur Transportebene T gesehen im Wesentlichen der Länge B des Nahtabschnittes 5 rechtwinklig zur Transportebene T entsprechen. Alternativ kann die Positioniermantelfläche 19 aber auch grösser als die besagte Länge B sein.

Vorzugsweise liegt das Positionierrollenpaar 13 mit den der Transportebene T zugewandten Stirnflächen 14 der Positionierrollen 13a, 13b auf der gleichen Höhe, wie das Transportrollenpaar 10 mit den der Transportebene T zugewandten Stirnflächen 15 der Transportrollen 10a, 10b. Besonders vorteilhaft weisen die Positioniermantelflächen 19 eine gleiche Höhe auf wie die Transportmantelflächen 18.

In der Figur 2a und der Figur 3 wird zudem gezeigt, dass im Bereich des Siegelrollenpaares 9 vorteilhafterweise ein Kühlelement 31 angeordnet ist, welches sich von der Transportebene T in Richtung des Siegelrollenpaars 9 erstreckt. Die Höhe des Kühlelementes 31 von der Transportebene T gesehen ist aber kleiner als der Abstand zwischen den der Transportebene T zugewandten Stirnflächen der Siegelrollen 9a, 9b und der Transportebene T bzw. zwischen der Oberkante 17a der Siegelmantelfläche 17 und der Transportebene T. Das Kühlelement 31 verhindert, dass sich Wärme von den Siegelrollen 9a, 9b in Richtung des nicht erwärmten Nahtabschnittes 5, auch mit 21 bezeichnet, ausdehnt. Ebenfalls kann damit verhindert werden, dass sich die Produkte unnötig aufwärmen. Das Kühlelement 31 hat vorzugsweise die Gestalt eines metallischen Bleches, welches ausserhalb des Schlauchbeutels liegt. Das Kühlelement 31 kann im Bereich der Siegelrollen 9a, 9b die Transportebene T bereitstellen.

Besonders bevorzugt wird die Längssiegelvorrichtung 1 in einer Horizontalschlauchbeutelmaschine zur Herstellung eines Schlauchbeutels eingesetzt. Die Transportebene T liegt dabei in der Horizontalen.

Zusammenfassend weisen die Ausführungsformen der erfindungsgemässen Vorrichtung folgende Vorteile auf:
- Der Schlaubeutel wird an der kalten Stelle gezogen, wodurch keine negativen Auswirkungen auf die Siegelnaht entstehen. Es kann also eine Siegelnaht mit hoher Präzision hergestellt werden.
- Aufgrund des Angreifens an der kalten Stelle, können auch dünnere Folien eingesetzt werden, was zu Kostenersparnissen führt und erst noch umweltfreundlich ist.
- Die Siegelvorrichtung ist bei bestehenden Maschinen nachrüstbar.

## Patentansprüche

1. Längssiegelvorrichtung (1) zur Herstellung einer Längssiegelnaht (2) an einem Packstoff (3), welcher einen Schlauchabschnitt (4) sowie einen sich dem Schlauchabschnitt (4) anschliessenden Nahtabschnitt (5) mit der Längssiegelnaht (2) aufweist, in welchem Nahtabschnitt (5) eine erste Lage (6) des Packstoffes und eine zweite Lage (7) des Packstoffes aufeinander liegen,
wobei der Schlauchabschnitt (4) auf einer ersten Seite, oberhalb, und der Nahtabschnitt (5) auf einer zweiten Seite, unterhalb, einer Transportebene (T) der Längssiegelvorrichtung (1) entlang einer parallel zu dieser Transportebene (T) verlaufender Laufrichtung (L) bewegt wird,
wobei die Längssiegelvorrichtung (1) eine Positioniereinrichtung (8) zur Positionierung der beiden Lagen (6, 7) zueinander, ein beheiztes Siegelrollenpaar (9) zur Bereitstellung der Längssiegelnaht (2) zwischen den beiden Lagen (6, 7) und ein in Laufrichtung (L) gesehen nach dem Siegelrollenpaar (9) angeordnetes unbeheiztes Transportrollenpaar (10) umfasst,
wobei das Siegelrollenpaar (9) zwei Siegelrollen (9a, 9b) umfasst, welche mit einer Siegelmantelfläche (17) mit dem Packstoff (3) in Kontakt sind und wobei das Transportrollenpaar (10) zwei Transportrollen (10a, 10b) umfasst, welche mit einer Transportmantelfläche (18) mit dem Packstoff in Kontakt sind,
wobei die Siegelmantelfläche (17) des Siegelrollenpaars (9) in einer Richtung (S) senkrecht zur Transportebene versetzt zur Transportmantelfläche (18) angeordnet ist, und wobei die Siegelmantelfläche (17) mit einer Oberkante (17a) und einer Unterkante (17b) begrenzt ist und wobei die Transportmantelfläche (18) mit einer Oberkante (18a) und einer Unterkante (18b) begrenzt ist, wobei die beiden Oberkanten (17a, 18a) bezüglich der besagten Richtung (S) mit einem Abstand (A) versetzt zueinander angeordnet sind und wobei die Oberkante (18a) der Transportmantelfläche (18) näher an der Transportebene (T) liegt, **dadurch gekennzeichnet, dass** die Unterkante (18b) der Transportmantelfläche (18) oberhalb der Oberkante (17a) der Siegelmantelfläche liegt, so dass das Transportrollenpaar (10) in Laufrichtung (L) gesehen mit der Transportmantelfläche (18) ausserhalb des Wirkbereichs (12) der Siegelmantelfläche (17) des Siegelrollenpaars (9) angreift.

2. Längssiegelvorrichtung nach Anspruch 1, **dadurch gekennzeichnet, dass** die Transportmantelfläche (18) des Transportrollenpaars (10) rechtwinklig zur Transportebene (T) gesehen eine Höhe (H10) aufweist, welche kleiner als der Abstand (11) zwischen der Transportebene (T) und der Oberkante (17a) der Siegelmantelfläche (17) ist, wobei die Transportmantelfläche (18) bezüglich der Transportebene (T) gesehen, ausschliesslich innerhalb des besagten Abstandes (11) liegt.

3. Längssiegelvorrichtung nach einem der vorhergehenden Ansprüche, **dadurch gekennzeichnet, dass** der Abstand (A) zwischen der Oberkante (17a) der Siegelmantelfläche (17) und der Oberkante (18a) der Transportmantelfläche (18) mindestens 3 mm, besonders bevorzugt mindestens 2 mm ist, oder dass der Abstand (A) zwischen der Oberkante (17a) der Siegelmantelfläche (17) und der Oberkante (18a) der Transportmantelfläche (18) zwischen 2 mm und 25 mm, insbesondere zwischen 2 mm und 15 mm, besonders bevorzugt zwischen 2 mm und 8 mm ist.

4. Längssiegelvorrichtung nach einem der vorhergehenden Ansprüche, **dadurch gekennzeichnet, dass** die Siegelmantelflächen (17) des Siegelrollenpaars (9) eine Höhe (H9) von mindestens 1 mm, und maximal von 15 mm, insbesondere von maximal 10 mm, besonders bevorzugt von maximal 5 mm aufweist.

5. Längssiegelvorrichtung nach einem der vorhergehenden Ansprüche, **dadurch gekennzeichnet, dass** die Positioniereinrichtung (8) ein unbeheiztes Positionierrollenpaar (13) mit zwei Positionierrollen (13a, 13b), die Positioniermantelflächen (19) aufweisen, umfassen, mit welchem die beiden Lagen (6, 7) des Packstoffes (3) zueinander positionierbar sind und mit welchem der Packstoff (3) entlang der Laufrichtung (L) bewegbar ist.

6. Längssiegelvorrichtung nach Anspruch 5, **dadurch gekennzeichnet, dass** das Positionierrollenpaar (13) in Laufrichtung (L) gesehen vor dem Siegelrollenpaar (9) angeordnet ist.

7. Längssiegelvorrichtung nach Anspruch 5 oder 6, **dadurch gekennzeichnet, dass** das Positionierrollenpaar (13) mit der zur Transportebene (T) zugewandten Stirnfläche (14) bzw. den Positioniermantelflächen (19) im Wesentlichen direkt an die Transportebene (T) anschliesst.

8. Längssiegelvorrichtung nach einem der Ansprüche 5 bis 6, **dadurch gekennzeichnet, dass** die Höhe der Positioniermantelflächen (19) rechtwinklig zur Transportebene (T) gesehen im Wesentlichen der Länge (B) des Nahtabschnittes (5) rechtwinklig zur Transportebene (T) gesehen entspricht oder grösser als die besagte Länge (B) ist.

9. Längssiegelvorrichtung nach einem der vorhergehenden Ansprüche, **dadurch gekennzeichnet, dass** das Positionierrollenpaar (13) mit den der Transportebene (T) zugewandten Stirnflächen (14) der Positionierrollen (13a, 13b) auf der gleichen Höhe liegt wie das Transportrollenpaar (10) mit den der Transportebene (T) zugewandten Stirnfläche (15) der Transportrollen, und/oder dass die Positioniermantelflächen (19) eine gleiche Höhe aufweisen wie die Transportmantelflächen (18).

10. Längssiegelvorrichtung nach einem der vorhergehenden Ansprüche, **dadurch gekennzeichnet, dass** das Transportrollenpaar (18) mit der zur Transportebene (T) zugewandten Stirnfläche (15) bzw. den Transportmantelflächen (18) im Wesentlichen direkt an die Transportebene (T) anschliesst.

11. Längssiegelvorrichtung nach einem der vorhergehenden Ansprüche, **dadurch gekennzeichnet, dass** im Bereich des Siegelrollenpaars (9) ein Kühlelement (15) angeordnet ist, welches sich von der Transportebene (T) in Richtung des Siegelrollenpaars (9) erstreckt, wobei die Höhe des Kühlelementes (15) von der Transportebene (T) gesehen kleiner ist, als der Abstand zwischen den der Transportebene (T) zugewandten Stirnflächen (16) der Siegelrollen (9a, 9b) und der Transportebene (T) oder zwischen der Oberkante (17a) der Siegelmantelfläche (17) der Siegelrollen (9a, 9b) und der Transportebene (T).

12. Längssiegelvorrichtung nach Anspruch 11, **dadurch gekennzeichnet, dass** das Kühlelement (15) die Gestalt eines Bleches aufweist.

13. Längssiegelvorrichtung nach einem der vorhergehenden Ansprüche, **dadurch gekennzeichnet, dass** jedes der Rollenpaare (9, 10, 13) zwei beabstandet zueinander angeordnete Rollen aufweist, welche sich um parallel zueinander verlaufende Mittelachsen (M) drehen, wobei der Packstoff (3) mit dem Nahtabschnitt (5) durch diese Rollen läuft.

14. Horizontalschlauchbeutelmaschine zur Herstellung eines Schlauchbeutels, **dadurch gekennzeichnet, dass** die Horizontalschlauchbeutelmaschine eine Längssiegelvorrichtung (1) nach einem der vorhergehenden Ansprüche aufweist, wobei die Transportebene (T) im Wesentlichen in der Horizontalen liegt.

## Claims

1. Longitudinal sealing device (1) for producing a longitudinal sealed seam (2) on a packaging material (3) which comprises a tubular portion (4) as well as a seam portion (5) that connects to the tubular portion (4) and has the longitudinal sealed seam (2), in which seam portion (5) a first layer (6) of the packaging material and a second layer (7) of the packaging material are located one above the other,
wherein the tubular portion (4) on a first side, above a conveying plane (T) of the longitudinal sealing device (1), and the seam portion (5) on a second side, below a conveying plane (T) of the longitudinal sealing device (1), are moved along a running direction (L) which extends parallel to said conveying plane (T),
wherein the longitudinal sealing device (1) includes a positioning device (8) for positioning the two layers (6, 7) with respect to one another, a pair of heated sealing rollers (9) for providing the longitudinal sealed seam (2) between the two layers (6, 7) and a pair of non-heated of conveyor rollers (10) which are arranged, when viewed in the running direction (L), downstream of the pair of sealing rollers (9),
wherein the pair of sealing rollers (9) include two sealing rollers (9a, 9b) which are in contact with the packaging material (3) by way of a sealing outside surface (17) and wherein the pair of conveyor rollers (10) include two conveyor rollers (10a, 10b) which are in contact with the packaging material by way of a conveying outside surface (18),
wherein the sealing outside surface (17) of the pair of sealing rollers (9) is arranged offset to the conveying outside surface (18) in a direction (S) perpendicular to the conveying plane, and wherein the sealing outside surface (17) is defined by a top edge (17a) and a bottom edge (17b) and wherein the conveying outside surface (18) is defined by a top edge (18a) and a bottom edge (18b), wherein the two top edges (17a, 18a) are arranged offset by a distance (A) with respect to one another with reference to said direction (S) and wherein the top edge (18a) of the conveying outside surface (18) lies closer to the conveying plane (T), **characterized in that** the bottom edge (18b) of the conveying outside surface (18) lies above the top edge (17a) of the sealing outside surface such that the pair of conveyor rollers (10), when viewed in the running direction (L), engage with the conveying outside surface (18) outside of the effective region (12) of the sealing outside surface (17) of the pair of sealing rollers (9).

2. Longitudinal sealing device according to Claim 1, **characterized in that** the conveying outside surface (18) of the pair of conveyor rollers (10), when viewed at right angles to the conveying plane (T), comprises a height (H10) which is smaller than the distance (11) between the conveying plane (T) and the top edge (17a) of the sealing outside surface (17), wherein the conveying outside surface (18), when viewed with reference to the conveying plane (T), is located exclusively within said distance (11).

3. Longitudinal sealing device according to one of the preceding claims, **characterized in that** the distance (A) between the top edge (17a) of the sealing outside surface (17) and the top edge (18a) of the conveying outside surface (18) is at least 3 mm, in a particularly preferred manner at least 2 mm, or **in that** the distance (A) between the top edge (17a) of the sealing outside surface (17) and the top edge (18a) of the conveying outside surface (18) is between 2 mm and 25 mm, in particular between 2 mm and 15 mm and in a particularly preferred manner between 2 mm and 8 mm.

4. Longitudinal sealing device according to one of the preceding claims, **characterized in that** the sealing outside surfaces (17) of the pair of sealing rollers (9) comprises a height (H9) of at least 1 mm, and a maximum of 15 mm, in particular a maximum of 10 mm and in a particularly preferred manner a maximum of 5 mm.

5. Longitudinal sealing device according to one of the preceding claims, **characterized in that** the positioning device (8) includes a pair of non-heated of positioning rollers (13) with two positioning rollers (13a, 13b) which comprise positioning outside surfaces (19), by way of which non-heated pair of positioning rollers the two layers (6, 7) of the packaging material (3) are positionable with respect to one another and by way of which the packaging material (3) is movable along the running direction (L).

6. Longitudinal sealing device according to Claim 5, **characterized in that** the pair of positioning rollers (13), when viewed in the running direction (L), is arranged upstream of the pair of sealing rollers (9).

7. Longitudinal sealing device according to Claim 5 or 6, **characterized in that** the pair of positioning rollers (13) connects substantially directly to the conveying plane (T) by way of the end face (14) that faces the conveying plane (T) or the positioning outside surfaces (19).

8. Longitudinal sealing device according to one of Claims 5 to 6, **characterized in that** the height of the positioning outside surfaces (19), when viewed at right angles to the conveying plane (T), corresponds substantially to the length (B) of the seam portion (5), when viewed at right angles to the conveying plane (T), or is greater than said length (B).

9. Longitudinal sealing device according to one of the preceding claims, **characterized in that** the pair of positioning rollers (13) with the end faces (14) of the positioning rollers (13a, 13b) that face the conveying plane (T) are located at the same height as the pair of conveyor rollers (10) with the end faces (15) of the conveyor rollers that face the conveying plane (T), and/or **in that** the positioning outside surfaces (19) comprise an identical height to the conveying outside surfaces (18).

10. Longitudinal sealing device according to one of the preceding claims, **characterized in that** the pair of conveyor rollers (18) connect substantially directly to the conveying plane (T) by way of the end face (15) that faces the conveying plane (T) or the conveying outside surfaces (18) .

11. Longitudinal sealing device according to one of the preceding claims, **characterized in that** a cooling element (15), which extends from the conveying plane (T) in the direction of the pair of sealing rollers (9), is arranged in the region of the pair of sealing rollers (9), wherein the height of the cooling element (15), when viewed from the conveying plane (T), is smaller than the distance between the end faces (16) of the sealing rollers (9a, 9b) that face the conveying plane (T) and the conveying plane (T) or between the top edge (17a) of the sealing outside surface (17) of the sealing rollers (9a, 9b) and the conveying plane (T).

12. Longitudinal sealing device according to Claim 11, **characterized in that** the cooling element (15) is in the form of a plate.

13. Longitudinal sealing device according to one of the preceding claims, **characterized in that** each of the pairs of rollers (9, 10, 13) comprise two rollers which are arranged spaced apart from one another and are rotated about center axes (M) which extend parallel to one another, wherein the packaging material (3) runs through said rollers with the seam portion (5).

14. Horizontal tubular bag packaging machine for producing a tubular bag, **characterized in that** the horizontal tubular bag packaging machine comprises a longitudinal sealing device (1) according to one of the preceding claims, wherein the conveying plane (T) is located substantially in the horizontal.

## Revendications

1. Dispositif de scellement longitudinal (1) pour la formation d'une soudure scellée longitudinale (2) sur un matériau d'emballage (3), qui présente une partie de tuyau flexible (4) ainsi qu'une partie de soudure (5) avec la soudure scellée longitudinale (2) se raccordant à la partie de tuyau flexible (4), partie de soudure (5) dans laquelle une première couche (6) du matériau d'emballage et une seconde couche (7) du matériau d'emballage sont superposées,
dans lequel la partie de tuyau flexible (4) est déplacée sur un premier côté, au-dessus, et la partie de soudure (5) est déplacée sur un second côté, en dessous, d'un plan de transport (T) du dispositif de scellement longitudinal (1) le long d'une direction de défilement (L) s'étendant parallèlement à ce plan de transport (T), dans lequel le dispositif de scellement longitudinal (1) comprend un dispositif de positionnement (8) pour le positionnement des deux couches (6, 7) l'une par rapport à l'autre, une paire de rouleaux de scellement chauffée (9) pour la préparation de la soudure scellée longitudinale (2) entre les deux couches (6, 7) et une paire de rouleaux de transport non chauffée (10) disposée après la paire de rouleaux de scellement (9) en considérant la direction de défilement (L),
dans lequel la paire de rouleaux de scellement (9) comprend deux rouleaux de scellement (9a, 9b), qui sont en contact par une surface latérale de scellement (17) avec le matériau d'emballage (3) et dans lequel la paire de rouleaux de transport (10) comprend deux rouleaux de transport (10a, 10b), qui sont en contact par une surface latérale de transport (18) avec le matériau d'emballage, dans lequel la surface latérale de scellement (17) de la paire de rouleaux de scellement (9) est disposée en décalage par rapport à la surface latérale de transport (18) dans une direction (S) perpendiculaire au plan de transport (T), et
dans lequel la surface latérale de scellement (17) est limitée par un côté supérieur (17a) et par un côté inférieur (17b), et
dans lequel la surface latérale de transport (18) est limitée par un côté supérieur (18a) et par un côté inférieur (18b),
dans lequel les deux côtés supérieurs (17a, 18a) sont disposés en décalage l'un par rapport à l'autre d'une distance (A) par rapport à ladite direction (S) et dans lequel le côté supérieur (18a) de la surface latérale de transport (18) est situé plus près du plan de transport (T),
**caractérisé en ce que** le côté inférieur (18b) de la surface latérale de transport (18) est situé au-dessus du côté supérieur (17a) de la surface latérale de scellement, de telle manière que la paire de rouleaux de transport (10), considérée dans la direction de défilement (L), agisse sur la surface latérale de transport (18) en dehors de la zone active (12) de la surface latérale de scellement (17) de la paire de rouleaux de scellement (9).

2. Dispositif de scellement longitudinal selon la revendication 1, **caractérisé en ce que** la surface latérale de transport (18) de la paire de rouleaux de transport (10), considérée perpendiculairement au plan de transport (T), présente une hauteur (H10) qui est plus petite que la distance (11) entre le plan de transport (T) et le côté supérieur (17a) de la surface latérale de scellement (17), dans lequel la surface latérale de transport (18), considérée par rapport au plan de transport (T), se situe exclusivement à l'intérieur de ladite distance (11).

3. Dispositif de scellement longitudinal selon l'une quelconque des revendications précédentes, **caractérisé en ce que** la distance (A) entre le côté supérieur (17a) de la surface latérale de scellement (17) et le côté supérieur (18a) de la surface latérale de transport (18) vaut au moins 3 mm, notamment de préférence au moins 2 mm, ou **en ce que** la distance (A) entre le côté supérieur (17a) de la surface latérale de scellement (17) et le côté supérieur (18a) de la surface latérale de transport (18) vaut entre 2 mm et 25 mm, en particulier entre 2 mm et 15 mm, notamment de préférence entre 2 mm et 8 mm.

4. Dispositif de scellement longitudinal selon l'une quelconque des revendications précédentes, **caractérisé en ce que** les faces latérales de scellement (17) de la paire de rouleaux de scellement (9) présentent une hauteur (H9) d'au moins 1 mm, et au maximum de 15 mm, en particulier au maximum de 10 mm, notamment de préférence au maximum de 5 mm.

5. Dispositif de scellement longitudinal selon l'une quelconque des revendications précédentes, **caractérisé en ce que** le dispositif de positionnement (8) comprend une paire de rouleaux de positionnement non chauffée (13) avec deux rouleaux de positionnement (13a, 13b), qui présentent des surfaces latérales de positionnement (19), avec laquelle les deux couches (6, 7) du matériau d'emballage (3) peuvent être positionnées l'une par rapport à l'autre et avec laquelle le matériau d'emballage (3) est déplaçable le long de la direction de défilement (L).

6. Dispositif de scellement longitudinal selon la revendication 5, **caractérisé en ce que** la paire de rouleaux de positionnement (13) est disposée avant la paire de rouleaux de scellement (9), en considérant la direction de défilement (L).

7. Dispositif de scellement longitudinal selon la revendication 5 ou 6, **caractérisé en ce que** la paire de rouleaux de positionnement (13) se raccorde essentiellement directement au plan de transport (T) par la face frontale (14) tournée vers le plan de transport (T) ou par les surfaces latérales de positionnement (19).

8. Dispositif de scellement longitudinal selon l'une quelconque des revendications 5 à 6, **caractérisé en ce que** la hauteur des surfaces latérales de positionnement (19), considérée perpendiculairement au plan de transport (T), correspond essentiellement à la longueur (B) de la partie de soudure (5), considérée perpendiculairement au plan de transport (T) ou est plus grande que ladite longueur (B).

9. Dispositif de scellement longitudinal selon l'une quelconque des revendications précédentes, **caractérisé en ce que** la paire de rouleaux de positionnement (13) se situe, avec les faces frontales (14) des rouleaux de positionnement (13a, 13b) tournées vers le plan de transport (T), à la même hauteur que la paire de rouleaux de transport (10) avec la face frontale (15) des rouleaux de transport tournée vers le plan de transport (T), et/ou **en ce que** les surfaces latérales de positionnement (19) présentent une hauteur égale à celle des surfaces latérales de transport (18).

10. Dispositif de scellement longitudinal selon l'une quelconque des revendications précédentes, **caractérisé en ce que** la paire de rouleaux de transport (18) se raccorde essentiellement directement au plan de transport (T) par la face frontale (15) tournée vers le plan de transport (T) ou par les surfaces latérales de transport (18) .

11. Dispositif de scellement longitudinal selon l'une quelconque des revendications précédentes, **caractérisé en ce qu'**un élément de refroidissement (15) est disposé dans la région de la paire de rouleaux de scellement (9), et s'étend à partir du plan de transport (T) dans la direction de la paire de rouleaux de scellement (9), dans lequel la hauteur de l'élément de refroidissement (15), considérée à partir du plan de transport (T), est plus petite que la distance entre les faces frontales (16) des rouleaux de scellement (9a, 9b) tournées vers le plan de transport (T) et le plan de transport (T) ou entre le côté supérieur (17a) de la surface latérale de scellement (17) des rouleaux de scellement (9a, 9b) et le plan de transport (T).

12. Dispositif de scellement longitudinal selon la revendication 11, **caractérisé en ce que** l'élément de refroidissement (15) présente la forme d'une tôle.

13. Dispositif de scellement longitudinal selon l'une quelconque des revendications précédentes, **caractérisé en ce que** chacune des paires de rouleaux (9, 10, 13) présente deux rouleaux disposés à distance l'un de l'autre, qui tournent autour d'axes centraux (M) s'étendant parallèlement l'un à l'autre, dans lequel le matériau d'emballage (3) défile avec la partie de soudure (5) à travers ces rouleaux.

14. Machine à sachets en tuyau flexible horizontale destinée à la fabrication d'un sachet en tuyau flexible, **caractérisée en ce que** la machine à sachets en tuyau flexible horizontale présente un dispositif de scellement longitudinal (1) selon l'une quelconque des revendications précédentes, dans laquelle le plan de transport (T) est situé essentiellement à l'horizontale.
